# EUROPÄISCHE PATENTANMELDUNG

(11) **EP 3 401 075 A1**
(43) Veröffentlichungstag der Anmeldung: **14.11.2018**
(21) Anmeldenummer: 18163497.3
(22) Anmeldetag: 22.03.2018
(51) Int. Cl.: B29C 45/27

(54) **EINSATZ ZUR VERWENDUNG IN EINER SPRITZGIESSDÜSE UND SPRITZGIESSDÜSE MIT EINEM SOLCHEN EINSATZ**

(30) Priorität: 11.05.2017 DE 102017110298
(71) Anmelder: Günther Heisskanaltechnik GmbH, 35066 Frankenberg (DE)
(72) Erfinder: Günther, Herbert, 35108 Allendorf (DE); Sommer, Siegrid, 35099 Burgwald (DE); Schnell, Torsten, 35104 Lichtenfels (DE)
(74) Vertreter: Patentanwälte Olbricht Buchhold Keulertz

(57) **Zusammenfassung**

Die Erfindung betrifft einen Einsatz (1) für eine Spritzgießdüse (6) mit einem Einsatzkörper (2), in dem mindestens ein Strömungskanal (3) mit einer Eintrittsöffnung und einer Austrittsöffnung (4) ausgebildet ist, wobei der Einsatzkörper (2) einen Halsabschnitt (5), zum Verbinden mit der Spritzgießdüse (6), einen Endabschnitt (7), zum Einsetzen in eine Formkavität eines Formeinsatzes, aufweist. Zudem weist der Einsatzkörper (2) einen radial gegenüber dem Endabschnitt (7) vorstehenden Flansch (8) mit einer Anschlagfläche (9), die der Austrittsöffnung (4) zugewandt ist und einer Fläche (10), die der Eintrittsöffnung zugewandt ist, auf. Es ist vorgesehen, dass der Halsabschnitt (5) mindestens eine Dichtung (11) aufweist.

## Beschreibung

Die Erfindung betrifft einen Einsatz zur Verwendung in einer Spritzgießdüse gemäß dem Oberbegriff von Anspruch 1 sowie eine Spritzgießdüse für ein Spritzgießwerkzeug mit einem erfindungsgemäßen Einsatz gemäß Anspruch 15.

Spritzgießdüsen, insbesondere Heißkanaldüsen, werden in Spritzgießwerkzeugen eingesetzt, um eine fließfähige Masse, beispielsweise ein Kunststoffmaterial, bei einer vorgegebenen Temperatur und unter hohem Druck einem trennbaren Formeinsatz zuzuführen. Sie haben meist ein Materialrohr mit einem Strömungskanal, der über eine Einlassöffnung mit einem Verteilerkanal in einer Verteilerplatte strömungsverbunden ist und über eine Auslassöffnung in der Angussöffnung des Formeinsatzes (Formnest) mündet.

Damit das fließfähige Material innerhalb des Strömungskanals der Heißkanaldüse nicht vorzeitig abkühlt und erstarrt, ist eine Heizvorrichtung vorgesehen, die außen auf das Materialrohr aufgesetzt oder aufgebracht ist. Um ferner zu erreichen, dass die fließfähige Masse bis an die Angussöffnung heran auf einer gleichmäßigen Temperatur gehalten wird, kann endseitig in dem Materialrohr eine Wärmeleithülse aus einem hochwärmeleitfähigen Material eingesetzt sein, die den Strömungskanal fortsetzt und endseitig die Auslassöffnung für die Spritzgießdüse bildet.

Bei einer offenen Düse ist die Wärmeleithülse meist als Düsenmundstück ausgebildet und mit einer Düsenspitze versehen, die mit ihrer kegelförmigen Spitze in oder kurz vor der Ebene der Angussöffnung endet. Bei einer Nadelverschlussdüse ist endseitig in der Auslassöffnung der Wärmeleithülse ein Dichtsitz für eine Verschlussnadel ausgebildet, die mittels eines Nadelantriebs zwischen einer Öffnungs- und einer Schließstellung hin und her bewegbar ist.

Bei der Verarbeitung von abrassiven Materialien oder von Spritzgießmassen, die abrassive Bestandteile enthalten, kann es an der Wärmeleithülse, insbesondere an der Auslassöffnung zu starkem Verschleiß kommen, so dass die Wärmeleithülse oder-je nach Konstruktion - die gesamte Heißkanaldüse relativ häufig ausgetauscht werden muss. Insbesondere bei Nadelverschlussdüsen entstehen Beschädigungen am Dichtsitz für die Verschlussnadel, so dass diese bei der periodischen Bewegung von einer Öffnungs- in eine Schließstellung nicht mehr exakt geführt werden kann und die Auslassöffnung nicht mehr dicht geschlossen wird.

Zudem sind die einzelnen Bauteile einer Spritzgießdüse generell einem abrassiven und adhäsiven Verschleiß ausgesetzt. Dieser Verschleiß basiert darauf, dass metallische Bauteile an anderen metallischen Bauteilen reiben, ohne dass es möglich ist einen Schmierstoff einzusetzen, welcher die herzustellenden Spritzgussprodukte verunreinigen könnte.

Um Verschleiß zu vermeiden, schlägt WO 2005/018906 A1 einen Einsatz vor, der vorzugsweise aus verschleißfestem Material ausgebildet ist. Dieser ist an dem formeinsatzseitigen Ende eines Düsenmundstücks angeordnet und entweder an sich oder zusammen mit dem Düsenmundstück längsverschieblich ausgebildet. Der Einsatz dient dem Schutz des Düsenmundstücks vor starkem Verschleiß und optimiert die Nadelführung bei Nadelverschlussdüsen, da er sowohl für die Verschlussnadel als auch für die Düse als Zentrierkörper fungiert.

Problematisch hierbei ist, dass der Einsatz mit dem Düsenmundstück bzw. einer Wärmeleithülse stets dicht verbunden sein muss. Dieses kann aber häufig nicht gewährleistet werden, wodurch beispielweise in der fließfähigen Masse enthaltenes Lösungsmittel in den Einsteckbereich des Einsatzes kriechen kann. Bereits eine geringfügige Leckage in diesem Bereich kann darüber entscheiden, ob der Artikel verkauft werden kann oder er als Ausschuss aussortiert werden muss.

Zudem sind derartige Einsätze meist längsverschieblich ausgebildet, so dass sich der Einsatz während des Betriebes zwischen Formeinsatz und Düse verschieben kann. Daraus resultieren unterschiedliche Anlageflächen des Einsatzes an dem Düsenmundstück bzw. an der Wärmeleithülse und in der Folge nicht gewollte Überstände an den Artikeln, was noch dazu mit unterschiedlichen Temperaturen einhergeht.

Ziel der Erfindung ist es, diese und weitere Nachteile des Standes der Technik zu überwinden und einen kompakten Einsatz für eine Spritzgießdüse zu schaffen, der leckagefrei in ein Materialrohr, ein Düsenmundstück oder eine Wärmeleithülse einer Spritzgießdüse eingesetzt werden kann. Der Einsatz soll einfach und kostengünstig herstellbar sein. Weiterhin soll eine Positionierung des Einsatzes zum Spritzgießwerkzeug erleichtert werden und präziser ausführbar sein. Zudem soll eine optimale Wärmeübertragung von der Spritzgießdüse auf den Einsatz ermöglicht werden und der Einsatz soll austauschbar sein.

Hauptmerkmale der Erfindung sind im kennzeichnenden Teil von Anspruch 1 und Anspruch 15 angegeben. Ausgestaltungen sind Gegenstand der Ansprüche 2 bis 14.

Bei einem Einsatz für eine Spritzgießdüse, mit einem Einsatzkörper, in dem mindestens ein Strömungskanal mit einer Eintrittsöffnung und einer Austrittsöffnung ausgebildet ist, wobei der Einsatzkörper einen Halsabschnitt, einen Endabschnitt und einen radial gegenüber dem Halsabschnitt und dem Endabschnitt vorstehenden Flansch, wobei der Flansch eine Anschlagfläche aufweist, die der Austrittsöffnung zugewandt ist, und eine Fläche aufweist, die der Eintrittsöffnung zugewandt ist, sieht die Erfindung vor, dass der Halsabschnitt eine Dichtung aufweist.

Die Dichtung bewirkt, dass keine Leckage zwischen dem Einsatz und der Spritzgießdüse auftreten kann. Dadurch können Spritzgussartikel in anhaltend hoher Qualität hergestellt und Ausschussartikel minimiert werden. Der Halsabschnitt dient dem Verbinden mit der Spritzgießdüse, d.h. er wird beispielweise in eine Wärmeleithülse, ein Düsenmundstück oder ein Materialrohr der Sprießgießdüse eingesteckt. Möglich ist aber auch, den Einsatz und den Halsabschnitt derart auszubilden, dass der Einsatz mit dem Halsabschnitt auf die Wärmeleithülse, das Düsenmundstück oder das Materialrohr aufgesteckt wird. Die Dichtung des Einsatzes steht dabei stets mit mindestens einem ihrer Flächenabschnitte mit der Spritzgießdüse bzw. deren Bauteilen in Kontakt.

Dazu trägt auch die Ausführungsform bei, wonach die Dichtung des Einsatzes in Form eines Dichtungsrings ausgebildet ist. Dieser lässt sich einfach und kostengünstig herstellen und auf dem Halsabschnitt des Einsatzes anbringen. Ein Dichtungsring ermöglicht zudem eine einfache Vormontage auf dem Einsatz. Dabei ist bevorzugt, dass der Innendurchmesser des Dichtungsrings an den Außendurchmesser des Halsabschnitts des Einsatzes angepasst ist, wodurch beispielsweise eine kraft- und/oder formschlüssige Verbindung des Dichtungsrings mit dem Einsatz erzielt werden kann. Der Dichtungsring kann ferner auf dem Einsatz vormontiert werden, ohne dass weitere Befestigungselemente notwendig sind.

Ist die Dichtung als Dichtungsring ausgebildet, kann eine Kontur des Dichtungsrings vorgesehen sein, die bevorzugt einen einheitlichen Querschnitt über den gesamten Umfang aufweist. Dadurch kann der Einsatz mit Dichtungsring einfach in die Spritzgießdüse eingesetzt werden, ohne dass eine bestimmte Orientierung der beiden Bauteile zueinander eingehalten werden muss. Zudem lässt sich ein derartiger Dichtungsring einfach und kostengünstig herstellen.

Eine wichtige Ausgestaltung der Erfindung sieht vor, dass die Dichtung einen Positionierring bildet. Damit bewirkt die Dichtung zusätzlich eine stets korrekte und exakte Positionierung des Einsatzes relativ zur Spritzgießdüse und zum Formeinsatz (Formnest), namentlich zur Artikelkante. Der vorzugsweise längsverschieblich angeordnete Einsatz befindet sich damit in eingebautem Zustand stets in der gleichen Position im Werkzeug und die Temperierung der Düse muss nur einmalig eingestellt werden. Auch müssen für eine korrekte Positionierung keine weiteren Bauteile vorgesehen werden, die beispielweise einen Mindestabstand zwischen dem Flansch des Einsatzes und der Spritzgießdüse gewährleisten. Die Handhabung und der Einbau der Spritzgießdüse wird dadurch deutlich vereinfacht. Ist der Einsatz zugleich als Verschlussnadel-Führung und Verschlussnadel-Dichtelement ausgebildet sorgt die erfindungsgemäße Lösung für eine stets präzise Ausrichtung und Führung der Verschlussnadel.

In einer bevorzugten Fortbildung ist vorgesehen, dass die Dichtung einen im Wesentlichen rechteckigen Querschnitt aufweist. Dabei erstreckt sich bevorzugt die Längsseite des Rechtecks in Längs- bzw. Axialrichtung zum Halsabschnitt. Ein derartig geformter Dichtring lässt sich einfach herstellen und ermöglicht eine gute Dichtwirkung.

Vorzugsweise weist der im Wesentlichen rechteckige Querschnitt der Dichtung mindestens eine konkave und/oder konvexe Ausformung auf. Dadurch wird sowohl die Dichtfunktion als auch die Positionierfunktion realisiert, indem sich die Dichtung bei der Montage der Spritzgießdüse in einem definierten Maß verformen und an die vorgesehenen Dichtflächen der Spritzgießdüse und des Einsatzes anpassen kann.

Eine bevorzugte Ausgestaltung sieht vor, dass der Dichtungsring auf mindestens einer der Längsseiten eine teilkreisförmige Ausformung aufweist. Bevorzugt sind zwei teilkreisförmige Ausformungen auf gegenüberliegenden Längsseiten der rechteckigen Querschnittsfläche angeordnet.

Ist diese mindestens eine Ausformung des im Wesentlichen rechteckigen Querschnitts nach außen geformt, entspricht dieses einer konvexen Ausformung. Diese ermöglicht, dass eine Ausrichtung des Dichtungsrings beim Zusammenführen des Dichtungsrings mit dem Einsatz und der Spritzgießdüse automatisch erfolgt. Die Dichtung liegt mindestens mit dieser konvexen Ausformung am Halsabschnitt und/oder im eingebauten Zustand an einer Fläche der Spritzgießdüse an. Die konvexe Ausformung kann zudem die Dichtwirkung verbessern, da im fertig montierten Zustand der Spritzgießdüse auf diesen Bereich der Dichtung eine erhöhte Kraft wirkt.

Alternativ ist bevorzugt mindestens eine konkave Ausformung vorzusehen. In dieser Ausgestaltung ist mindestens eine der Längsflächen des rechteckigen Querschnitts teilkreisförmig nach innen geformt. Hierdurch wird eine Aussparung in dem Dichtungsring erhalten, die beim Zusammenführen des Einsatzes mit einer Spritzgießdüse eine bessere Anpassung der Dichtung ermöglicht.

Vorzugsweise weist die Dichtung zwei konvexe oder zwei konkave Ausformungen auf, wobei die Ausformungen auf gegenüberliegenden Längsseiten der Dichtung oder des Dichtungsrings ausgebildet sind. Dadurch kann eine sehr gute Dichtwirkung erzielt werden.

Eine weitere wichtige Ausgestaltung der Erfindung sieht vor, dass die Dichtung in Längsrichtung des Einsatzes mindestens eine Schneid- und/oder Quetschkante aufweist. Diese Scheid- und/oder Quetschkante ist in Ihrer Wandstärke und Länge so ausgelegt, dass sie sich bei der Montage der Spritzgießdüse und beim Aufheizen des Werkzeugs im plastischen Bereich derart verformt, dass eine optimale Abdichtung erzielt wird und dass zugleich eine exakte Positionierung des Einsatzes relativ zur Spritzgießdüse gewährleistet ist, ohne dass das Materialrohr, die Wärmeleithülse oder das Düsenmundstück der Spritzgießdüse Schaden nimmt. Der deformierte Bereich der Dichtung, d.h. die Schneid- und/oder Quetschkante ist folglich sowohl eine Dichtung als auch ein Abstandshalter, der den Einsatz exakt positioniert, so dass dieser stets bündig zur Artikeloberfläche im Anspritzbereich liegt.

Man erkennt, dass die Schneid- und/oder Quetschkante in Längsrichtung des Einsatzes einen Fortsatz der Dichtung bildet, der einen gegenüber dem rechteckigen Querschnitt der Dichtung verjüngten Querschnitt aufweist und der sich bevorzugt in Richtung Flansch erstreckt. Dieser Fortsatz ist bevorzugt auf der kurzen Seite des im Wesentlichen rechteckigen Querschnitts ausgeformt und dient mithin der genauen Positionierung der Dichtung und damit des Einsatzes relativ zur Spritzgießdüse und damit auch zum Formeinsatz. Der Fortsatz wird als Schneid- und/oder Quetschkante beim Einbau des Einsatzes in die Spritzgießdüse und bei deren Montage leichter deformiert als beispielweise der rechteckige Haupt-Querschnitt der Dichtung, wodurch eine erhöhte Dichtwirkung erzielt wird.

In einer bevorzugten Ausgestaltung ist die Dichtung auf einem Außenumfang des Halsabschnitts angeordnet. Dadurch kann die Dichtung rasch und bequem an dem Einsatz montiert werden.

Für die Funktion der Dichtung ist es weiter günstig, wenn in dem Außenumfang des Halsabschnitts eine Umfangsausnehmung für die Dichtung ausgebildet ist. Diese ist damit stets sicher gehalten. Durch die Umfangsausnehmung wird ferner eine korrekte und präzise Positionierung der Dichtung gewährleistet. Letztere kann nicht verrutschen. Sie wird vielmehr formschlüssig in der Umfangsausnehmung gehalten.

In einer weiteren Ausgestaltung ist die Dichtung benachbart zum radial vorstehenden Flansch angeordnet. Sie steht ferner bevorzugt mit der Fläche des Flansches, die der Eintrittsöffnung zugewandt ist, in Kontakt, wobei hierbei vorzugsweise der Fortsatz in Form der Schneid- und/oder Quetschkante mit der Fläche des Flansches in Kontakt steht.

Damit stützt sich die Dichtung mit dem Fortsatz bzw. mit der Schneid- und/oder Quetschkante auf dem Flansch ab, was dafür sorgt, dass der Einsatz stets korrekt innerhalb des Werkzeugs positioniert ist. Zudem wird dadurch auch eine stets korrekte Positionierung des Einsatzes beim Einbau in die Spritzgießdüse gewährleistet, wodurch eine optimale Abdichtung und eine optimale Temperierung der fließfähigen Masse beim Durchfließen durch den Strömungskanal gewährleistet werden kann.

Die Dichtung liegt vorzugsweise im unteren Bereich des Halsabschnitts, wobei der untere Bereich des Halsabschnitts benachbart zum radial vorstehenden Flansch ausgebildet ist. Vorteilhaft steht die Dichtung zumindest abschnittsweise mit der Fläche des Flansches, die der Eintrittsöffnung zugewandt ist, in Kontakt.

Wird der Halsabschnitt in oder auf eine Wärmeleithülse, ein Düsenmundstück oder ein Materialrohr gesteckt, ermöglicht diese Ausgestaltung, dass zum einen ein präziser Kontakt zwischen den beiden Bauteilen und zum anderen eine zuverlässige Dichtwirkung erzielt wird. Der Dichtungseffekt der Dichtung kann sowohl in radialer als auch in axialer Richtung bestmöglichst genutzt werden.

In einer bevorzugten Ausgestaltung ist die Dichtung verformbar. Hierdurch kann bei der Herstellung des Einsatzes mit der Dichtung sowie beim Zusammensetzen des Einsatzes mit der Spritzgießdüse eine bestmögliche Dichtwirkung erzielt werden. Eine optimale Dichtwirkung wird dadurch erzielt, dass Verformungskräfte auf die Dichtung wirken, wodurch die Dichtung an den Freiraum zwischen Einsatz und Spritzgießdüse angepresst und somit angepasst wird.

Vorzugsweise wird dabei die Stärke der Dichtung in Radialrichtung derart ausgelegt, dass eine bestmögliche Verformbarkeit erzielt werden kann.

In einer bevorzugten Ausführungsform weist die Dichtung ein metallisches Material auf. Metallische Materialien können flexibel je nach gewünschter Anforderungen ausgewählt werden. Besonders bevorzugt ist beispielweise Kupfer, da dieses eine gute Verformbarkeit bei gleichzeitiger guter Wärmeübertragung aufweist.

Wird bespielweise eine Dichtung aus Kupfer eingesetzt, kann die Dichtung zum einen beim Zusammensetzen des Einsatzes mit der Spritzgießdüse derart verformt werden, dass eine optimale Dichtwirkung erhalten wird, zum anderen weist Kupfer eine gute Wärmeleitfähigkeit auf, so dass beispielweise Wärme von der Wärmeleithülse auf den Einsatz übertragen werden kann und somit die fließfähige Masse bis zur Auslassöffnung optimal temperiert ist.

Alternativ weist die Dichtung plastisch verformbare Materialien auf, insbesondere Kunststoffe, die resistent gegenüber Lösungsmittel und hitzebeständig sind, oder Keramiken, mit guten Deformationseigenschaften und hoher Wärmeleitfähigkeit.

In einer bevorzugten Ausgestaltung weist der Flansch, auf einer radial äußeren Fläche, ein Gewinde auf. Hiermit kann der Einsatz einfach in einer Spritzgießdüse montiert oder demontiert werden.

In einer vorteilhaften Ausgestaltung der Erfindung ist der Einsatz rotationssymmetrisch zu einer Längsachse. Diese Form des Einsatzes ist einfach und kostengünstig herzustellen sowie einfach in der Spritzgießdüse zu montieren, da keine spezielle Ausrichtung des Einsatzes vorgenommen werden muss.

In einer bevorzugten Ausführungsform ist vorgesehen, dass der Einsatzkörper zweistückig ausgebildet ist. Dabei weist der Einsatzkörper bevorzugt einen ersten Teil und einen zweiten Teil auf, wobei der erste Teil im Wesentlichen vom Halsabschnitt und der zweite Teil im Wesentlichen vom Endabschnitt gebildet werden. Es ist bevorzugt vorgesehen, dass der erste Teil aus einem hochwärmeleitenden Material gefertigt ist und sich von Halsabschnitt des Einsatzkörpers bis zu einer Begrenzungsfläche erstreckt und dass der zweite Teil aus einem zweiten Material gefertigt ist, welches von dem hochwärmeleitfähigen Material des ersten Teils verschiedenen ist, wobei sich der zweite Teil von der Begrenzungsfläche bis zum Endabschnitt des Einsatzkörpers erstreckt, und wobei der erste Teil und der zweite Teil in und/oder entlang der Begrenzungsfläche miteinander verbunden sind.

Damit ist es möglich, in nur einem einzigen Bauteil, das beispielsweise in das untere, formnestseitige Ende eines Materialrohrs oder einer Wärmeleithülse der Spritzgießdüse eingesetzt ist, mehrere Materialeigenschaften zu kombinieren und für die Spritzgießdüse und das zu verarbeitende fließfähige Material zu nutzen, ohne dass mehrere verschiedene Bauteile benötigt und montiert werden müssen. Dabei können die verschiedenen Materialien den Anforderungen entsprechend gewählt und zusammengestellt werden. Wird der erste Teil des Einsatzes aus einem hochwärmeleitfähigen Material gefertigt, kann die von einer Heizung der Spritzgießdüse erzeugte Wärme möglichst weit bis an die Angussöffnung herangeführt werden.

Der zweite Teil hingegen aus einem zweiten Material kann beispielweise aus einem verschleißfesten Material gefertigt sein, um den Verschleiß des Einsatzes und damit die Standzeit der Spritzgießdüse zu erhöhen, insbesondere wenn der zweite Teil des Einsatzes den Dichtsitz für eine Verschlussnadel bildet.

Vorzugsweise weist das zweiten Material eine geringe Wärmeleitfähigkeit auf als das hochwärmeleitfähige Material.

Der erste Teil und der zweite Teil des Einsatzes können vorteilhaft als separate Teile gefertigt werden, die nach der Fertigung präzise und fest miteinander verbunden werden. Alternativ ist es auch möglich, zunächst einen Rohling aus einem Verbundstoff des hochwärmeleitfähigen Materials und des dritten Materials herzustellen und anschließend den Einsatz aus diesem Verbundstoff zu fertigen. Durch die Verbindung der aus zwei unterschiedlichen Materialien bestehenden Teile des Einsatzes mit zusätzlicher Beschichtung können die vorteilhaften Eigenschaften der Materialien punktgenau und auf kleinstem Bauraum bestmöglich genutzt werden. Ein kosten- und wartungsintensiver Einbau verschiedener Einzelteile wird vermieden. Ebenso sind zwischen den beiden Teilen keine aufwendigen Dichtungselemente oder Dichtflächen notwendig, die ggf. zu Leckagen an oder in der Spritzgießdüse bzw. im Werkzeug führen könnten. Die beiden Teile sind vielmehr stets fest miteinander verbunden und der Einsatz bildet in der Handhabung ein einheitliches Bauteil mit minimalen Abmessungen.

Die Verbindung erstreckt sich aufgrund der Begrenzungsfläche zwischen den unterschiedlichen verwendeten Materialien, sodass zwar die Eigenschaften mehrerer Materialien in einem Bauteil kombiniert werden, gleichzeitig aber eine klare Begrenzung der Materialien auf die verschiedenen Teile gewährleistet ist. Eine Mischung der beiden Stoffe außerhalb der Begrenzungsfläche wird vermieden. Dies trägt zur optimalen und präzisen Nutzung der Materialien bei der Verwendung eines Einsatzes in einer Spritzgießdüse bei.

Ausführungsformen der Erfindung sehen vor, dass der erste Teil und der zweite Teil stoffschlüssig, formschlüssig oder reibschlüssig miteinander verbunden sind. Mit einer stoffschlüssigen Verbindung lassen sich minimale Abmessungen erzielen. Denkbar sind aber auch mechanische Verbindungen in Form eines Formschlusses oder eines Reibschlusses, beispielsweise durch Verrasten, Verschrauben, Verpressen oder Schrumpfen.

Vorzugsweise sind der erste Teil und der zweite Teil an der Begrenzungsfläche stoffschlüssig miteinander verbunden, insbesondere verschweißt, verlötet oder verklebt.

Aufgrund des beschränkten Bauraums ist es insbesondere vorteilhaft, wenn der erste und der zweite Teil mittels Schweißen, vorzugsweise mittels Diffusionsschweißen oder Laserschweißen, stoffschlüssig miteinander verbunden sind.

Als optimales Verfahren zur Verbindung des ersten und des zweiten Teils hat sich das Schweißen erwiesen, weil der erste und der zweite Teil meist aus einem Metallwerkstoff ausgebildet sind und durch Schweißen eine zuverlässige und dauerhaft stabile Verbindung zwischen den Teilen ausgebildet werden kann. Insbesondere das Diffusionsschweißen weist dabei Vorteile gegenüber anderen Schweißmethoden auf. Die Qualität der Schweißverbindungen ist außerordentlich hoch. Es entsteht ein porenfreier, dichter Werkstoffverbund, der höchsten mechanischen, thermischen und korrosionstechnischen Anforderungen gerecht wird. Dabei muss beim Diffusionsschweißen kein Zusatzwerkstoff verwendet werden, so dass die Fügenaht keine Fremdlegierungsbestandteile aufweist und somit bei optimaler Ausführung grundwerkstoffähnliche Eigenschaften besitzt. Durch das Fehlen einer schmelzflüssigen Phase im Fügeprozess kann zudem eine hochgenaue und konturgetreue Verschweißung gewährleistet werden.

Alternativ kann der erste Teil mittels einer mechanischen Verbindungsanordnung mit dem zweiten Teil verbunden sein. Hierzu kann unter anderem eine Rastverbindung, eine Schraubverbindung, eine Pressverbindung oder eine Bajonettverbindung genutzt werden. Beide Teile können auch durch Schrumpfen miteinander verbunden werden. Alle vorgenannten Verbindungsarten haben den Vorteil, dass eine solche Verbindung des ersten Teils mit dem zweiten Teil dauerhaft fest und dicht ausgebildet ist.

Besonders vorteilhaft ist es, wenn es sich bei dem zweiten Material des zweiten Teils um ein verschleißfestes Material handelt. Hierdurch kann - z.B. im Bereich einer Nadelführung - der Verschleiß des Einsatzes aufgrund des wiederholten Abgleitens der Ventilnadel entlang der Innenwände des Strömungskanals im Wirkbetrieb der Spritzgießdüse verringert werden. Gleichzeitig gewährleistet eine hochwärmeleitfähige Ausführung des ersten Teils des Einsatzes, welcher beispielsweise an einer Wärmeleithülse angeordnet sein kann, eine optimale Temperaturverteilung im Angussbereich.

Dabei hat es sich als vorteilhaft erwiesen, wenn das wärmeleitfähige Material und das zweite Material eine hohe Wärmeausdehnung aufweisen. Durch die Verwendung eines Materials mit hoher Wärmeausdehnung, dehnt sich der Einsatz beim Aufheizen des Spritzgießwerkzeugs gezielt aus, so dass der Einsatz nach Erreichen der Betriebstemperatur der Spritzgießdüse optimal zwischen Materialrohr und/oder Wärmeleithülse einerseits und Formeinsatz andererseits eingeklemmt ist und eine dauerhaft dichte Anordnung bildet.

In einer weiteren vorteilhaften Bauform weisen das Material des ersten Teils und das Material des zweiten Teils einen identischen oder annähernd gleichen Ausdehnungskoeffizient auf.

Sind die Ausdehnungskoeffizienten der beiden Teile des Einsatzes unterschiedlich, berücksichtigt die Differenz zwischen den thermischen Ausdehnungskoeffizienten des wärmeleitfähigen und des zweiten Materials die elastischen Kapazitäten der Verbindung zwischen dem erstem und dem zweitem Teil, so dass die beiden Teile des Einsatzes stets dauerhaft und fest miteinander verbunden sind.

In einer speziellen Ausführungsform ist das verschleißfeste Material ein Werkzeugstahl. Dieser zeichnet sich durch seine guten Verschleißschutzeigenschaften aus. Dabei ist Werkzeugstahl kostengünstiger als andere Materialien mit vergleichbaren Verschleißschutzeigenschaften. Hierbei kann insbesondere ein Werkzeugstahl mit einer niedrigen Wärmeleitfähigkeit vorteilhaft sein, weil in diesem Fall eine thermische Trennung der Kunststoffschmelze von dem Formeinsatz des Spritzgusswerkzeugs erfolgt, was ein vorzeitiges Abkühlen der Kunststoffschmelze im Bereich des zweiten Abschnitts vermeidet. Die zusätzliche Beschichtung aus einem Material mit einer geringen Wärmeleitfähigkeit unterstützt diesen Effekt zusätzlich.

Alternativ könnte auch eine Keramik, welche sich durch eine hohe Verschleißfestigkeit und geringe thermische Leitfähigkeit auszeichnet, als verschleißfestes Material eingesetzt werden.

Eine weitere Ausführungsform der Erfindung sieht vor, dass sich die Begrenzungsfläche, entlang der das erste Teil mit dem zweiten Teil verbunden ist, senkrecht oder schräg zur Längsachse des Einsatzkörpers erstreckt. Insbesondere ist vorgesehen, dass sich die Begrenzungsfläche, entlang der das erste Teil mit dem zweiten Teil verbunden ist, ausschließlich senkrecht oder schräg zur Längsachse des Einsatzkörpers erstreckt

Dadurch ergibt sich beispielsweise eine scheibenförmige Begrenzungsfläche mit minimaler Ausdehnung. Durch den senkrechten Verlauf der Begrenzungsfläche kann eine optimale Verbindung zwischen dem ersten und dem zweiten Teil hergestellt werden.

Alternativ hierzu kann sich die Begrenzungsfläche auch schräg zur Längsachse des Einsatzkörpers erstrecken, beispielsweise wenn eine größere Begrenzungsfläche gewünscht ist. Letztere kann beispielsweise konisch ausgebildet sein. Durch eine schräg zur Längsachse ausgerichtete Begrenzungsfläche lässt sich insbesondere eine stoffschlüssige Verbindung verstärken, da in diesem Fall ein größerer Abschnitt als Begrenzungsfläche zur Verfügung steht.

In einer weiteren speziellen Ausführungsform wird der Flansch bevorzugt von dem ersten Teil oder dem zweiten Teil gebildet. In beiden Varianten ist der Flansch einheitlich aus einem Material gebildet und weist die Eigenschaften des jeweiligen Materials auf. Auf diese Weise kann der Flansch beispielsweise entweder die wärmeleitende Funktion des Halsabschnitts fortsetzen oder den durch das verschleißfeste Material geschützten Bereich des Endabschnitts vergrößern.

Gemäß einer anderen Ausführungsform wird der Flansch von dem ersten Teil und dem zweiten Teil gebildet. Auf diese Weise können die Eigenschaften beider Materialien auf engstem Raum optimal kombiniert werden. Da der Flansch hauptsächlich als Stützflansch fungiert, weist dieser sowohl Bereiche auf, die Kontakt zu dem Formeinsatz haben, als auch Bereiche, die je nach Bedarf am Materialrohr, dem Düsenmundstück und/oder der Wärmeleithülse anliegen können. In beiden Bereichen des Flansches müssen dabei unterschiedliche Anforderungen erfüllt werden. Während die Temperatur im Übergangsbereich zwischen Flansch und erstem Abschnitt konstant hoch gehalten wird, ist gleichzeitig der Wärmeübergang vom Materialrohr, dem Düsenmundstück oder der Wärmeleithülse auf den Formeinsatz minimal. Zudem muss gerade an den Berührungsflächen von einer stärkeren Abnutzungsbelastung ausgegangen werden, sodass an diesen Stellen ein stärkerer Verschleißschutz gewährleistet ist. Da die beiden Teile aus den verschiedenen Materialien den Flansch ausbilden, können diese gegensätzlichen Anforderungen in einem Bauteil auf kleinstem Raum gleichzeitig erfüllt werden. Dies gilt insbesondere auch für den gesamten Einsatz.

Nach einer weiteren vorteilhaften Ausführungsform bildet der Einsatz einen Zentrierkörper für eine Ventilnadel einer Spritzgussdüse. Dabei bildet der Einsatz im ersten Teil und/oder im Halsabschnitt eine in Richtung des Flansches konisch zulaufende Wandung des Strömungskanals. Eine solche Wandung zentriert die Verschlussnadel während der Schließbewegung, sodass das freie Ende der Verschlussnadel stets präzise in ihren Dichtsitz einlaufen kann. Bevorzugt ist dabei der Verlauf des Strömungskanals im Bereich des ersten Teils und/oder Halsabschnitts so ausgeführt, dass die Verschlussnadel bereits auf die Angussöffnung des Einsatzes ausgerichtet wird. Somit wird ein übermäßiger Verschleiß der Verschlussnadel zusätzlich vermieden.

Nach einer weiteren wichtigen Ausführungsform bildet der zweite Teil einen Dichtsitz für eine Ventilnadel einer Spritzgießdüse. Dies kann beispielsweise durch Anpassung des Durchmessers des Strömungskanals im Bereich des Endabschnitts an den Umfang der Ventilnadel einer Nadelverschlussdüse erreicht werden. Entsprechende Ausführungsformen haben den Vorteil, dass der Verschleiß des Einsatzes im Bereich des Endabschnitts, verursacht durch wiederholtes Abgleiten der Ventilnadel entlang der Oberflächen des Strömungskanals, deutlich reduziert wird.

Nach einer weiteren Ausführungsform ist der zweite Teil des Einsatzes dazu ausgebildet, mit dem vorderen Ende einen Abschnitt einer Wandung eines Formnestes zu bilden.
Des Weiteren betrifft die Erfindung eine Spritzgießdüse für ein Spritzgießwerkzeug mit einem erfindungsgemäßen Einsatz. Bei der Spritzgießdüse kann es sich sowohl um eine Heißkanaldüse als auch um eine Kaltkanaldüse handeln. Dabei kann der Einsatz sowohl in Spritzgießdüsen mit offenem Anguss und Düsenspitze als auch in Spritzgießdüsen mit Wärmeleithülse und Nadelverschluss Verwendung finden.

Spritzgießdüsen mit dem erfindungsgemäßen Einsatz profitieren von der Dichtung, die am Halsabschnitt des Einsatzes angeordnet ist, so kann eine verbesserte Dichtwirkung erzielt werden. Grundsätzlich schützt der Einsatz die Spritzgießdüse vor Verschleißerscheinungen und gewährleistet einen langanhaltende, wartungsarme Verwendung der Spritzgießdüse.

Zudem ist der Einsatz einfach und kostengünstig herstellbar. Auch ist die Positionierung des Einsatzes im Spritzgießwerkzeug präziser ausführbar.

Handelt es sich bei der Spritzgießdüse, um eine Nadelverschlussdüse, hat dies zudem den Vorteil, dass der Einsatz zusätzlich als Zentrierkörper fungiert, weil die Nadel innerhalb des Einsatzes lagestabil und präzise geführt wird. Durch die verbesserte Positionierung kann auch die Nadelführung weiter verbessert werde. Dadurch werden Beschädigungen an der Verschlussnadel aber auch Verschleißerscheinungen an der Spritzgießdüse vermindert.

Die Spritzgießdüse selbst kann in verschiedenen Ausführungsformen verschiedene Bestandteile umfassen. Alle Ausführungsformen der Spritzgießdüse weisen ein Materialrohr auf, in dem wenigstens ein Strömungskanal ausgebildet ist, der mit einer von wenigstens einem Formeinsatz gebildeten Formkavität des Spritzgießwerkzeugs strömungsverbunden ist.

Je nach Ausführungsform weist die Spritzgießdüse zudem ein eine Wärmeleithülse auf, welche als Düsenmundstück ausgeführt sein kann. Die Wärmeleithülse wird endseitig in das Materialrohr eingesetzt oder auf das Materialrohr aufgesetzt und bildet die Austrittsöffnung für den Strömungskanal. Die Wärmeleithülse wird dabei aus einem hochwärmeleitfähigen Material gefertigt damit die Schmelze mit konstant hoher Temperatur dem Formeinsatz zugeführt werden kann, ohne dass ein sogenannter kalter Pfropfen entsteht.

Der erfindungsgemäße Einsatz ist bevorzugt an dem formeinsatzseitigen Ende des Materialrohrs angeordnet, wobei die Dichtung zwischen dem Einsatz und dem formeinsatzseitigen Ende des Materialrohrs angeordnet ist. In einer bevorzugten Fortbildung ist vorgesehen, dass die Spritzgießdüse eine Wärmeleithülse aufweist an deren formeinsatzseitigen Ende der Einsatz mit der Dichtung angeordnet ist, wobei die Dichtung zwischen dem Einsatz und dem formeinsatzseitigen Ende der Wärmeleithülse angeordnet ist. Dabei kann der Einsatz in oder auf das Materialrohr oder die Wärmeleithülse eingesetzt oder aufgesetzt sein. Der Halsabschnitt des Einsatzes ist dazu entsprechend angepasst. Zudem ist die Dichtung bevorzugt an den Halsabschnitt des Einsatzes und das formsatzseitige Ende des Materialrohrs oder der Wärmeleithülse angepasst. Der Einsatz ist weiterhin getrennt von den restlichen Bestandteilen der Spritzgießdüse ausgebildet und stellt ein separates Bauteil der Spritzgießdüse dar.

Dabei hat es sich als besonders vorteilhaft erwiesen, wenn der Einsatz während des Betriebes der Spritzgießdüse fest in dem Materialrohr, dem Düsenmundstück oder der Wärmeleithülse installiert ist, aber wechselbar ausgebildet ist. Das heißt, dass der Einsatz mindestens sobald das Werkzeug seine Betriebstemperatur erreicht hat, zwischen dem Materialrohr und dem Formeinsatz, dem Düsenmundstück und dem Formeinsatz oder zwischen der Wärmeleithülse und dem Formeinsatz eingeklemmt oder anderweitig befestigt ist. Der Einsatz nimmt aufgrund der Dichtung eine vorher definierte Position ein, in der eine optimale Wärmeübertragung von der Spritzgießdüse auf den Einsatz ermöglicht wird. Dadurch kann eine optimale Temperierung der fließfähigen Masse bis zum Formeinsatz gewährleistet werden.

Zudem ist es möglich den Einsatz schnell und bequem ein- und auszubauen. Hierzu sind keine Werkzeuge oder sonstigen Hilfsmittel erforderlich. Auch müssen zur Befestigung des Einsatzes in der Spritzgießdüse keine zusätzlichen Teile oder Hilfsmittel, wie beispielsweise Schraubgewinde, Schraubhülsen oder dergleichen am Einsatz selbst oder in der Spritzgießdüse vorgesehen sein, weil der Einsatz während des Betriebes der Spritzgießdüse zuverlässig gesichert ist. Der Austausch des Einsatzes kann dennoch stets schnell und kostengünstig erfolgen.

Des Weiteren ist es vorteilhaft wenn der Halsabschnitt mit der Dichtung zumindest abschnittsweise dem Materialrohr, dem Düsenmundstück oder der Wärmeleithülse formangepasst ist und/oder der Endabschnitt zumindest abschnittsweise dem Formeinsatz formangepasst ist. Durch die Formanpassung wird eine dichte Verbindung erreicht und damit verhindert, dass Schmelze in Zwischenräume gelangen kann. Der Einsatz bildet somit mit den anderen Teilen der Spritzgießdüse ein Stecksystem, aus dem der Einsatz leicht durch Herausziehen werkzeuglos entnommen werden kann, gleichzeitig aber während des Betriebs der Spritzgießdüse zuverlässig durch beispielsweise Einklemmen gesichert ist.

In einer bevorzugten Ausgestaltung ist der Einsatz an dem formeinsatzseitigen Ende des Materialrohr, des Düsenmundstücks oder der Wärmeleithülse angeordnet, wobei das formeinsatzseitige Ende des Materialrohr, des Düsenmundstück oder der Wärmeleithülse eine Aussparung aufweist, in der die Dichtung des Einsatzes eingreift. Diese Aussparung ist bevorzugt nahe dem formsatzseitigen Ende oder am formsatzseitigen Ende des Materialrohrs, des Düsenmundstücks oder der Wärmeleithülse angeordnet. Dadurch kann der Einsatz mit der Dichtung in das entsprechende Bauteil der Spritzgießhülse eingeschoben oder aufgesetzt werden. Die Dichtung wird zwischen dem Halsabschnitt des Einsatzes und der Aussparung des Materialrohr, des Düsenmundstück oder der Wärmeleithülse angeordnet und je nach Krafteinwirkung deformiert, wodurch eine möglichst optimale Abdichtung zwischen dem Einsatz und der Spritzgießdüse erfolgt.

Zudem ist eine derartige Anordnung einfach und kostengünstig herstellbar und montierbar. Die Dichtung bewirkt dabei eine möglichst präzise Positionierung der Bauteile, wodurch eine gute Temperierung der fließfähigen Masse bis zum Formeinsatz ermöglicht wird.

Weitere Merkmale, Einzelheiten und Vorteile der Erfindung ergeben sich aus dem Wortlaut der Ansprüche sowie aus der folgenden Beschreibung von Ausführungsbeispielen anhand der Zeichnungen. Es zeigen:
- Fig. 1: einen schematischen Längsschnitt durch eine erste Ausführungsform eines erfindungsgemäßen Einsatzes,
- Fig. 2: einen schematischen Längsschnitt durch eine weitere Ausführungsform eines erfindungsgemäßen Einsatzes,
- Fig. 3: einen schematischen Längsschnitt durch eine weitere Ausführungsform eines erfindungsgemäßen Einsatzes,
- Fig. 4: einen schematischen Längsschnitt durch eine noch andere Ausführungsform eines erfindungsgemäßen Einsatzes.

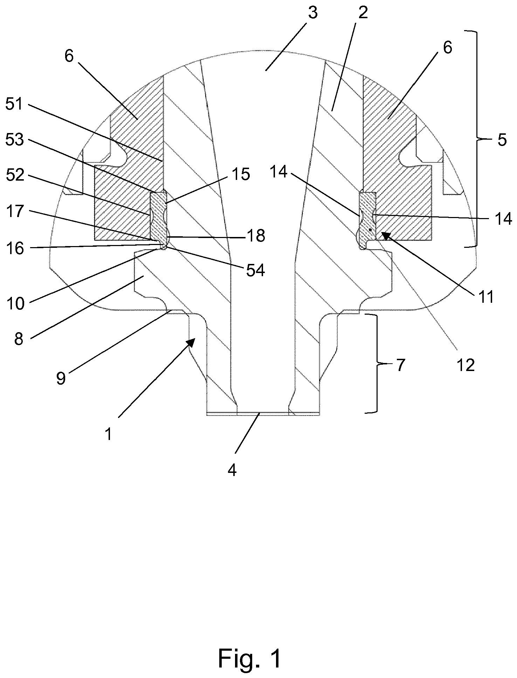

Der in Fig. 1 allgemein mit 1 bezeichnete Einsatz ist für die Verwendung in einer (nicht näher dargestellten) Spritzgießdüse eines Spritzgießwerkzeugs vorgesehen. Die Spritzgießdüse hat ein Materialrohr und eine Heizvorrichtung, wobei in dem Ende des Materialrohres, welches einem Formeinsatz des Spritzgießwerkzeugs zugewandt ist, eine Wärmeleithülse 6 eingesetzt ist. Letztere nimmt - im kalten Zustand des Spritzgießwerkzeugs - den Einsatz 1 längsverschieblich auf.

Der Einsatz 1 hat einen Einsatzkörper 2, in dem ein Strömungskanal 3 mit einer (nicht sichtbaren) Eintrittsöffnung und einer Austrittsöffnung 4 ausgebildet ist. Die Eintrittsöffnung steht in Strömungsverbindung mit einem im Materialrohr und der Wärmeleithülse ausgebildeten Schmelzekanal. Die Austrittsöffnung 4 mündest - wenn die Spritzgießdüse im Spritzgießwerkzeug montiert ist - unmittelbarer in einer Angussöffnung in dem (gleichfalls nicht gezeigten) Formeinsatz des Spritzgießwerkzeugs.

Der Einsatz 1 hat ferner einen Halsabschnitt 5, zum Einführen bzw. Einsetzen des Einsatzkörpers 2 in die Spritzgießdüse, namentlich in die Wärmeleithülse 6, wobei der Halsabschnitt 5 vorzugsweise in die Wärmeleithülse 6 eingesteckt oder eingepresst wird. An seinem dem Halsabschnitt 5 gegenüberliegenden Ende hat der Einsatz 1 einen Endabschnitt 7. Mit diesem wird der Einsatz 1 in den Formeinsatz des Spritzgießwerkzeugs eingesetzt.

Zwischen dem Halsabschnitt 5 und dem Endabschnitt 7 ist ein radial gegenüber dem Halsabschnitt 5 und dem Endabschnitt 7 vorstehender Flansch 8 ausgebildet. Dieser hat eine Anschlagfläche 9, die der Austrittsöffnung 4 zugewandt ist, und eine Fläche 10, die der Eintrittsöffnung zugewandt ist. Mit der Anschlagfläche 9 kann sich der Einsatz 1, wenn die Spritzgießdüse und das Spritzgießwerkzeug montiert sind, an oder auf dem Formeinsatz abstützen. Die Fläche 10 auf dem Flansch 8 dient als Stützfläche oder Gegenlager für eine Dichtung 11, die auf dem Halsabschnitt 5 des Einsatzes ausgebildet ist.

Man erkennt in Fig. 1, dass die Dichtung 11 bevorzugt im unteren Bereich des Halsabschnitts 5 angeordnet ist, wobei der untere Bereich des Halsabschnitts 5 benachbart zum radial vorstehenden Flansch 8 ausgebildet ist. Die Dichtung 11 sitzt als in sich geschlossener Ring auf dem Außenumfang 51 des Halsabschnitts 5. Dieser ist in diesem Bereich mit einer umlaufenden Umfangsausnehmung 52 versehen, so dass die Dichtung 11 in der Umfangsausnehmung 52 liegt. Letztere wird in Längsrichtung L des Einsatzkörpers 2 an ihrem der Eintrittsöffnung des Strömungskanals 3 zugewandten Ende 53 von einer Stufe 53 begrenzt, während das der Austrittsöffnung 4 zugewandte Ende der Umfangsausnehmung 52 von dem Flansch 8 und dessen Fläche 10 begrenzt wird.

Die Dichtung 11 hat einen Hauptkörper 12 mit einem im Wesentlichen rechteckigen Querschnitt sowie einen Fortsatz 16, der gegenüber dem rechteckigen Querschnitt verjüngt ausgebildet ist und mit dem sich die Dichtung 11 auf dem Flansch 8 abstützt. Der Fortsatz befindet sich mithin auf der kurzen Seite 17 des rechteckigen Querschnitts der Dichtung. In den Längsseiten 15 des rechteckigen Querschnitts der Dichtung 11 ist jeweils eine konkave Ausformung 14 eingebracht. Diese können einander gegenüberliegend ausgebildet sein. Die Ausformungen 14 können aber auch in Längsrichtung L auf unterschiedlichen Höhen liegen.

Die bevorzugt aus einem verformbaren Material, beispielsweise einem Metall, gefertigte Dichtung 11 bildet damit für den Einsatz 1 zunächst einen Dichtungsring, der den Einsatzkörper 2 gegenüber der Wärmeleithülse 6 abdichtet, wenn der Einsatz 1 in die Wärmeleithülse 6 eingesetzt ist und die Spritzgießdüse in dem Spritzgießwerkzeug montiert ist. Sobald dieses seine Betriebstemperatur erreicht, werden der Hauptkörper 12 der Dichtung 11 und der Fortsatz 16 soweit verformt, dass zwischen dem Einsatz 1 und der Wärmeleithülse eine dauerhaft zuverlässig Abdichtung geschaffen wird.

Der Fortsatz 16 bildet hierbei eine Schneid- und/oder Quetschkante, die in ihren Abmessungen derart ausgelegt ist, dass sie von dem Flanschrand im plastischen Bereich verformt wird. Gleichzeitig sorgen die konkaven Ausnehmungen 14 dafür, dass sich auch der Hauptkörper 12 der Dichtung 11 zwischen dem Halsabschnitt 5 des Einsatzkörpers 2 und der Wärmeleithülse 6 gezielt verformen kann, so dass zwischen dem Einsatz 1 und der Wärmeleithülse 6 eine dauerhaft zuverlässige Abdichtung geschaffen wird. Die Wärmeleithülse 6 wird dabei nicht beschädigt, denn der Fortsatz 16 scheidet sich lediglich in den Flansch 8 des Einsatzkörpers 1 ein.

Der Dichtungsring schafft damit eine dauerhaft zuverlässige Abdichtung im Isolationsbereich der Spritzgießdüse, d.h. der zu verarbeitende Kunststoff oder dessen Bestandteile können nicht mehr zwischen dem Einsatz 1 und der Wärmeleithülse 6 hindurch nach außen in die - je nach Anwendungsbereich gefüllten oder ungefüllten - Vorkammerbereich der Spritzgießdüse gelangen. Der Einsatz 1 bietet damit nicht nur einen Verschleißschutz bei der Verarbeitung abrassiver Medien. Er sorgt auch für eine dauerhaft zuverlässige Abdichtung.

Die Dichtung bildet aber nicht nur einen Dichtungsring, sondern auch einen Positionierring.

Sobald das Spritzgießwerkzeug seine Betriebstemperatur erreicht hat, bildet die Dichtung 11 mit Ihrem Hauptkörper 12 und dem Fortsatz 16 einen definierten Anschlag zwischen dem Flansch 8 und der Wärmeleithülse 6. Die Dichtung 11 stützt sich hierbei mit dem Fortsatz 16 innerhalb der Umfangsausnehmung 52 auf der Fläche 10 des Flansches 8 ab. Der Einsatz 1 kann sich damit nicht mehr versehentlich in Richtung Materialrohr verschieben. Er bildet vielmehr einen definierten Anschlag für die Spritzgießdüse gegenüber dem Formeinsatz des Spritzgießwerkzeugs, wobei der Einsatz 1 stets bündig zur Artikeloberfläche positioniert ist. Ungewollte Überstände an der Artikelgrenze werden dadurch wirksam vermieden.

Die Dichtung 11 sorgt damit für eine stets genaue Positionierung des Einsatzes 1 und damit der Spritzgießdüse im Werkzeug.

Es kann vorgesehen sein, dass der Einsatz 1 im Bereich des Fortsatzes 16 eine an den Fortsatz 16 angepasste Einbuchtung 18 aufweist, in die der Fortsatz 16 beim Einbau in eine Spritzgießdüse 6 eingedrückt werden kann. Dadurch lässt sich die Dichtwirkung weiter erhöhen, ebenso die Präzision der Positionierung.

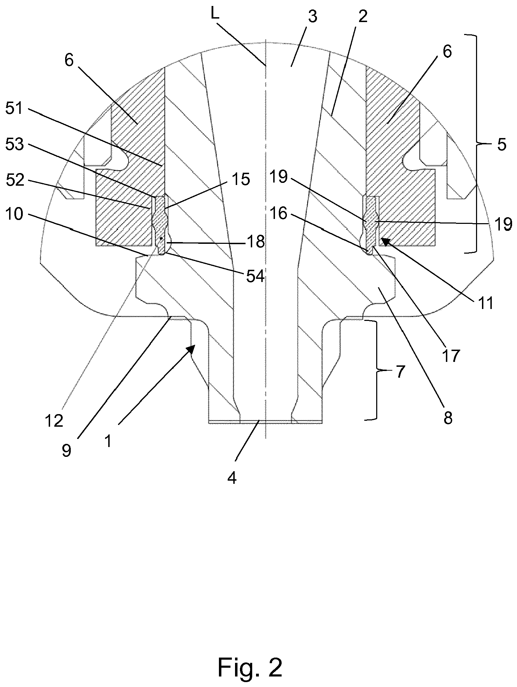

Fig. 2 zeigt eine andere Ausführungsform eines erfindungsgemäßen Einsatzes 1 mit einer Dichtung 11 am Halsabschnitt 5.

Die Dichtung 11 hat auch hier einen Hauptkörper 12 mit einem im Wesentlichen rechteckigen Querschnitt sowie einen Fortsatz 16, der gegenüber dem rechteckigen Querschnitt verjüngt ausgebildet ist und mit dem sich die Dichtung 11 auf dem Flansch 8 abstützt. Der Fortsatz befindet sich auf der kurzen Seite 17 des rechteckigen Querschnitts der Dichtung.

Im Gegensatz zu der Ausführungsform von Fig. 1 sind hier jedoch in den Längsseiten 15 des rechteckigen Querschnitts der Dichtung 11 keine konkaven Ausformungen 14 eingebracht. Auf den Längsseiten 15 sind konvexe Ausformungen 19 vorgesehen. Diese können einander gegenüberliegend ausgebildet sein. Die Erhebungen 19 können aber auch in Längsrichtung L auf unterschiedlichen Höhen liegen.

Die bevorzugt aus einem verformbaren Material, beispielsweise einem Metall, gefertigte Dichtung 11 bildet damit für den Einsatz 1 einen Dichtungsring, der den Einsatzkörper 2 gegenüber der Wärmeleithülse 6 abdichtet, wenn der Einsatz 1 in die Wärmeleithülse 6 eingesetzt ist und die Spritzgießdüse in dem Spritzgießwerkzeug montiert ist. Sobald dieses seine Betriebstemperatur erreicht, werden der Hauptkörper 12 der Dichtung 11 mit den Ausformungen 19 und der Fortsatz 16 soweit verformt, dass zwischen dem Einsatz 1 und der Wärmeleithülse eine dauerhaft zuverlässig Abdichtung geschaffen wird.

Der Fortsatz 16 bildet hierbei eine Schneid- und/oder Quetschkante, die in ihren Abmessungen derart ausgelegt ist, dass sie von dem Flanschrand im plastischen Bereich verformt wird. Letzteres gilt auch für die Ausformungen 19, die mit einer erhöhten Kraft gegen den Halsabschnitt 5 und die Wärmeleithülse 6 gepresst werden.

Gleichzeitig bildet auch hier der Dichtring 11 einen Positionierring, der den Einsatz 1 gegenüber dem Wärmeleitkörper 6 in einer definierten Position hält.

Die Fig. 1 und Fig. 2 zeigen beide Ausführungsformen, bei denen der erfindungsgemäße Einsatz 1 in einer Spitzgießdüse eingebaut ist, wobei der Einsatz 1 in einer Wärmeleithülse 6 sitzt. Der Einsatz kann aber auch -je nach Anwendung und Ausbildung der Spritzgießdüse - direkt in das Materialrohr oder in ein Düsenmundstück der Spritzgießdüse eingesetzt werden. Der Halsabschnitt 5 sitzt hierbei bevorzugt mit geringem Bewegungsspiel in der Spritzgießdüse.

Alternativ ist es auch möglich den Einsatz 1, insbesondere den Halsabschnitt so auszubilden, dass dieser auf einen Außenumfang der Wärmeleithülse 6 aufgesetzt wird. Das gleiche gilt für die Montage des Einsatzes 1 direkt auf dem Materialrohr oder auf einem Düsenmundstück.

Für die Aufnahme der Dichtung 11 in der Wärmeleithülse 6 ist eine Aussparung 22 vorgesehen, deren (nicht näher bezeichnete) Innenwandung eine Dichtfläche bildet.

Diese Aussparung 22 ist bevorzugt an die Dichtung 11 oder den Dichtungsring 12 angepasst. So kann die Aussparung 22 als umlaufender Ring mit einem im Wesentlichen rechteckigen Querschnitt ausgebildet sein.

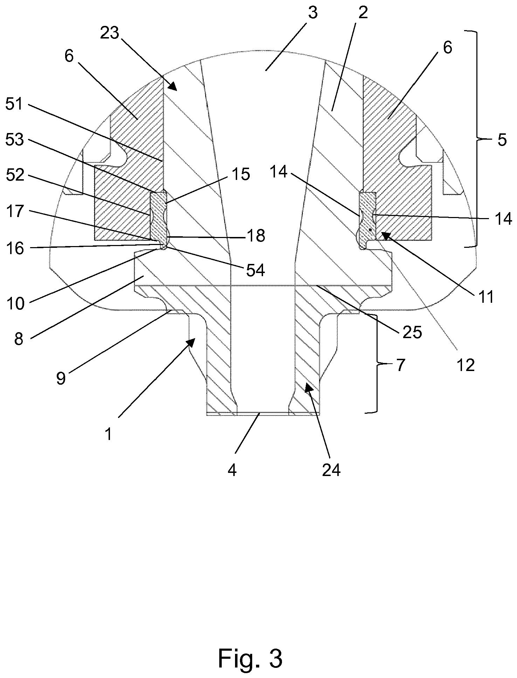

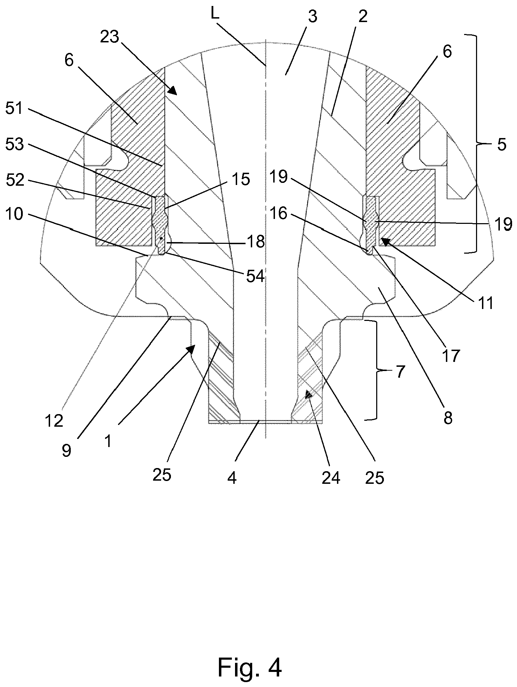

Die Fig. 3 und 4 zeigen jeweils einen Längsschnitt durch eine weitere bevorzugte Ausführungsform eines erfindungsgemäßen Einsatzes 1. In beiden Abbildungen Fig. 3 und 4 ist der Einsatzkörper 2 zweistückig ausgebildet. Dabei weist der Einsatzkörper 2 einen ersten Teil 23 und einen zweiten Teil 24 auf. Der erste Teil 23 wird im Wesentlichen vom Halsabschnitt 5 und der zweite Teil 24 wird im Wesentlichen vom Endabschnitt 7 gebildet. Dabei ist bevorzugt, dass der erste Teil 23 aus einem hochwärmeleitfähigen Material gefertigt ist und sich über den Halsabschnitt 5 des Einsatzkörpers 2 bis zu einer Begrenzungsfläche 25 erstreckt. Der zweite Teil 24 ist aus einem zweiten Material gefertigt und erstreckt sich von der Begrenzungsfläche 25 über den Endabschnitt 7 des Einsatzkörpers 2. Die beiden Teile 23, 24 sind in und/oder entlang der Begrenzungsfläche 25 miteinander verbunden.

In Fig. 3 ist gezeigt, dass sich die Begrenzungsfläche 25 zwischen dem ersten Teil 23 und dem zweiten Teil 24 senkrecht zur Längsachse L des Einsatzkörpers 2 erstreckt.

Fig. 4 zeigt eine alternative Ausgestaltung der Begrenzungsfläche 25. Dabei erstreckt sich die Begrenzungsfläche 25 zwischen dem ersten Teil 23 und dem zweiten Teil 24 schräg zur Längsachse L des Einsatzkörpers 2.

Sämtliche aus den Ansprüchen, der Beschreibung und der Zeichnung hervorgehenden Merkmale und Vorteile, einschließlich konstruktiver Einzelheiten, räumlicher Anordnungen und Verfahrensschritten, können sowohl für sich als auch in den verschiedensten Kombinationen erfindungswesentlich sein.

### Bezugszeichenliste

| | | | |
|---|---|---|---|
| 1 | Einsatz | 11 | Dichtung |
| 2 | Einsatzkörper | 12 | Dichtungsring |
| 3 | Strömungskanal | 13 | Vertiefung |
| 4 | Austrittsöffnung | 14 | Konkave Ausformung |
| 5 | Halsabschnitt | 15 | Längsseiten der Dichtung 11 |
| 51 | Außenumfang | 16 | Fortsatz / Schneid-/Quetschkante |
| 52 | Umfangsausnehmung | 17 | Kurze Seite der Dichtung 11 |
| 53 | Ende | 18 | Einbuchtung |
| 54 | Ende | 19 | Konvexe Ausformung |
| 6 | Wärmeleithülse | 22 | Aussparung |
| 7 | Endabschnitt | 23 | Erste Teil |
| 8 | Flansch | 24 | Zweite teil |
| 9 | Anschlagfläche | 25 | Begrenzungsfläche |
| 10 | Fläche | L | Längsachse des Einsatzes 1 |

## Patentansprüche

1. Einsatz (1) für eine Spritzgießdüse, mit einem Einsatzkörper (2), in dem mindestens ein Strömungskanal (3) mit einer Eintrittsöffnung und einer Austrittsöffnung (4) ausgebildet ist, wobei der Einsatzkörper (2) einen Halsabschnitt (5), einen Endabschnitt (7) und einen radial gegenüber dem Halsabschnitt (5) und dem Endabschnitt (7) vorstehenden Flansch (8), wobei der Flansch (8) eine Anschlagfläche (9) aufweist, die der Austrittsöffnung (4) zugewandt ist, und eine Fläche (10) aufweist, die der Eintrittsöffnung zugewandt ist, **dadurch gekennzeichnet, dass** der Halsabschnitt (5) eine Dichtung (11) aufweist.

2. Einsatz (1) nach Anspruch 1, **dadurch gekennzeichnet, dass** die Dichtung (11) in Form eines Dichtungsrings ausgebildet ist.

3. Einsatz (1) nach Anspruch 1 oder 2, **dadurch gekennzeichnet, dass** die Dichtung (11) einen Positionierring bildet.

4. Einsatz (1) nach einem der Ansprüche 1 bis 3, **dadurch gekennzeichnet, dass** die Dichtung (11) einen im Wesentlichen rechteckigen Querschnitt aufweist.

5. Einsatz (1) nach Anspruch 4, **dadurch gekennzeichnet, dass** der im Wesentlich rechteckige Querschnitt der Dichtung (11) mindestens eine konkave und/oder konvexe Ausformung (14, 19) aufweist.

6. Einsatz (1) nach einem der vorangehenden Ansprüche, **dadurch gekennzeichnet, dass** die Dichtung (11) in Längsrichtung (L) des Einsatzes (1) mindestens eine Schneid- und/oder Quetschkante (16) aufweist.

7. Einsatz (1) nach einem der vorangegangenen Ansprüche, **dadurch gekennzeichnet, dass** die Dichtung (11) auf einem Außenumfang (51) des Halsabschnitts (5) angeordnet ist.

8. Einsatz (1) nach Anspruch 6, **dadurch gekennzeichnet, dass** in dem Außenumfang (51) des Halsabschnitts (5) eine Umfangsausnehmung (52) für die Dichtung (11) ausgebildet ist.

9. Einsatz (1) nach einem der vorangegangenen Ansprüche, **dadurch gekennzeichnet, dass** die Dichtung (11) benachbart zum radial vorstehenden Flansch (8) angeordnet ist.

10. Einsatz (1) nach einem der vorangegangenen Ansprüche, **dadurch gekennzeichnet, dass** die Dichtung (11) zumindest abschnittsweise mit der Fläche (10) des Flansches (8), die der Eintrittsöffnung zugewandt ist, in Kontakt steht.

11. Einsatz (1) nach Anspruch 10, **dadurch gekennzeichnet, dass** die Dichtung (11) mit der Schneid- und/oder Quetschkante (16) mit der Fläche (10) des Flansches (8) in Kontakt steht.

12. Einsatz (1) nach einem der vorangegangene Ansprüche, **dadurch gekennzeichnet, dass** der Einsatzkörper (2) zweistückig ausgebildet ist, wobei der erste Teil (23) im Wesentlichen vom Halsabschnitt (5) und der zweite Teil (24) im Wesentlichen vom Endabschnitt (7) gebildet werden, und wobei der erste Teil (23) aus einem hochwärmeleitenden Material gefertigt ist und sich von Halsabschnitt (5) des Einsatzkörpers (2) bis zu einer Begrenzungsfläche (25) erstreckt und dass der zweite Teil (24) aus einem zweiten Material gefertigt ist, welches vom hochwärmeleitenden Material verschiedenen ist, wobei sich der zweite Teil (24) von der Begrenzungsfläche (25) bis zum Endabschnitt (7) des Einsatzkörpers (2) erstreckt, und wobei der erste Teil (23) und der zweite Teil 24) in und/oder entlang der Begrenzungsfläche (25) miteinander verbunden sind.

13. Einsatz (1) nach Anspruch 11, **dadurch gekennzeichnet, dass** sich die Begrenzungsfläche (25) senkrecht oder schräg zur Längsachse (L) des Einsatzkörpers (2) erstreckt.

14. Einsatz (1) nach einem der Ansprüche 11 oder 12, **dadurch gekennzeichnet, dass** der erste Teil (23) und der zweite Teil (24) in und/oder entlang der Begrenzungsfläche (25) miteinander verschweißt sind.

15. Spritzgießdüse (6) für ein Spritzwerkzeug mit Einsatz (1) gemäß einem der vorangegangenen Ansprüche.
